# EUROPÄISCHE PATENTSCHRIFT

(11) **EP 1 858 385 B1**
(45) Veröffentlichungstag und Bekanntmachung des Hinweises auf die Patenterteilung: **02.12.2009**
(21) Anmeldenummer: 06707997.0
(22) Anmeldetag: 03.02.2006
(51) Int. Cl.: A47J 37/08

(54) **TOASTER**
TOASTER
GRILLE-PAIN

(30) Priorität: 11.02.2005 DE 102005006349
(43) Veröffentlichungstag der Anmeldung: 28.11.2007
(73) Patentinhaber: BSH Bosch und Siemens Hausgeräte GmbH, 81739 München (DE)
(72) Erfinder: FRITZ, Jürgen, 83358 Seebruck (DE); KO, John, On Lok Tsuen, Hong Kong (CN); MÜHLBACHER, Richard, 83224 Grassau (DE); STEFFL, Michael, 83250 Marquartstein (DE)
(86) Internationale Anmeldenummer: PCT/EP2006/050637
(87) Internationale Veröffentlichungsnummer: WO 2006/084820

(56) Entgegenhaltungen:
- DE-A1- 3 045 751
- DE-U1- 20 180 403
- GB-A- 1 366 882
- GB-A- 1 375 625
- GB-A- 2 075 336
- GB-A- 2 167 288

## Beschreibung

Die Erfindung bezieht sich auf einen Toaster oder Brotröster der im Oberbegriff der Ansprüche 1 und 11 erläuterten Art.

Toaster sind seit Jahren und in den unterschiedlichsten Ausgestaltungen bekannt. Da Toaster mit einer relativ leistungsstarken Heizeinheit ausgerüstet werden müssen, können die Seitenwände des Toasters relativ heiß werden. Dies ist aus Sicherheitsgründen möglichst zu unterbinden. Bei bisher bekannten Toastern wird dies durch Reflektoren und Luftspalte versucht. Aus der DE 299 00 776 U ist weiterhin ein elektrischer Toaster bekannt, bei dem die Heizeinheit auf einer Schicht aus einem mikroporösen thermischen Isoliermaterial oder daran angrenzend angeordnet ist. Das Isoliermaterial füllt den Spalt zwischen der Heizeinheit und der benachbarten Seitenwand vollständig aus, erstreckt sich demnach von der oberen Abdeckung bis zur unteren Begrenzung. Dies ist einerseits teuer, andererseits wird dadurch das Gewicht des Toasters stark erhöht.

Die GB 1 375 625 A offenbart einen Toaster mit einem Gehäuse, das Seitenwände und eine obere Abdeckung aufweist, wobei im Gehäuse ein vertikaler Toastraum sowie Heizelemente vorgesehen sind. Zudem ist an den Seitenwänden und den Stirnseiten ein geeignetes Isoliermaterial vorgesehen, um die Temperatur auf den Außenflächen tolerierbar zu halten. Auch die GB 2 167 288 A, die DE 201 80 403 U1 und die DE 30 45 751 A1 offenbaren gattungsgemäße Toaster mit Isolierungen.

Aus der DE 201 80 403 U ist weiterhin ein Brotröster oder Toaster mit verstärkten Wänden bekannt. Der Toaster enthält Seitenwände, die sich von einer unteren Begrenzung oder Sohle im Wesentlichen senkrecht nach oben erstrecken und in einer freien Kante enden. Um zu verhindern, dass die Seitenwände zusammengedrückt werden, wenn der Benutzer den Toaster ergreift, wird die freie Kante durch einen Verstärkungsrand verstärkt. Damit der Verstärkungsrand seine Wirkung entfalten kann, muss der gesamte obere Rand der Wände rund um die obere Abdeckung, mit dem Verstärkungsrand versehen sein, der entweder als einstückiger Ring oder in Form von Ringteilen vorliegt, die lückenlos aneinanderstoßend angeordnet sind. Der Verstärkungsring besteht aus einem wärmbeständigen Kunststoff und enthält vorstehende Rippen, die eine eingesteckte, obere Abdeckung auf Abstand zum Ring halten, so dass sich zwischen der oberen Abdeckung und dem Verstärkungsring ein isolierender Luftspalt bildet. Der Verstärkungsring ist mit einem Innen- und Außensteg über das obere Ende des Gehäuses gesetzt, wobei der Innensteg des Rings die Gehäusewand über eine bestimmte Länge thermisch abschirmt. Der Innensteg ist jedoch nur ausgebildet und bestimmt für die thermische Abschirmung gegenüber der Wärmeabstrahlung vom Abdeckblech.

Beim bekannten Toaster ist die obere Abdeckung als Unterstützungsfläche zum Erhitzen oder Aufbacken von Brötchen oder analogen Nahrungsmitteln ausgebildet. Dies ist jedoch nachteilig, da dabei die Nahrungsmittel direkt auf dem heißen Abdeckblech liegen, was zu lokalen Überhitzungen führen kann. Zum Aufbacken von Brötchen oder zum Erhitzen von Nahrungsmitteln sind weiterhin Gestelle aus Draht oder dgl. bekannt, die lösbar auf dem Toaster zu befestigen sind. Aber auch hier besteht die Gefahr einer lokalen Überhitzung der Nahrungsmittel, wenn sich beispielsweise die Drähte der Gestelle sehr stark aufheizen.

Der Erfindung liegt die Aufgabe zugrunde, einen optimaler isolierten Toaster bereitzustellen.

Die Aufgabe wird durch den Toaster gemäß Anspruch 1 und dem Toaster gemäß Anspruch 11 gelöst.

Die erfindungsgemäße Ausgestaltung gemäß Anspruch 1 basiert auf der Feststellung der vorliegenden Erfinder, dass es mit der erfindungsgemäßen Isolierschürze, die sich über eine größere Strecke in Richtung auf die untere Begrenzung von mehr als 25 mm erstreckt, und die einen Trennsteg aufweist, der zwischen einer Abdeckung und einer Seitenwand angeordnet ist, möglich ist, nicht nur die thermische Abstrahlung vom Abdeckblech von der Seitenwandung fernzuhalten, sondern auch die Seitenwandung durch die nach oben steigende Wärme von der Rückseite der Reflektoren oder die über die Reflektoren streichende, erwärmte Luft abzuschirmen, ohne dass es dazu einer Isolierschicht bedarf, die sich über den gesamten Abstand zwischen der unteren Begrenzung und der oberen Abdeckung erstreckt.

Durch die erfindungsgemäße Ausgestaltung gemäß Anspruch 11 wird durch den Isolierblock eine thermische Entkopplung zwischen den warmen Teilen des Toasters und dem Brötchenaufsatz erreicht, wodurch dieser wesentlich kühler bleibt und lokale Überhitzungen nicht zu befürchten sind, und durch eine zwischen der Seitenwand und der Heizeinheit angeordnete Isolierschürze, die sich an der Innenseite der Seitenwand über einen Isolierbereich erstreckt, der sich über eine Breite von wenigstens 25 mm in Richtung auf die untere Begrenzung erstreckt und im Abstand zur unteren Begrenzung (4) endet, ein thermische Entkopplung zwischen Auflage und Seitenwand erreicht.

Vorteilhafte Weiterbildungen der Erfindung sind den Unteransprüchen zu entnehmen.

Wird die Isolierschürze mit einem Isolierblock verbunden, der von der Isolierschürze an der der Seitenwand abgewandten Seite vorstehen, so kann damit die thermische Isolierung des Gehäuses des Toasters weiter verbessert werden, da der Isolierblock die stirnseitigen Bereiche des Gehäuses abschirmt. Bei einem normalen, symmetrischen Design und einer symmetrischen Konstruktion sind bevorzugt beide Enden der Isolierschürze mit jeweils einem Isolierblock versehen.

Zur Verbesserung der Wirkung kann der Isolierblock die Heizeinheit stirnseitig übergreifen. Für eine wirksame thermische Isolierung muss jedoch die Isolierschürze nicht über den gesamten Umfang der Abdeckung bzw. des oberen Randes des Gehäuses reichen.

Die Isolierschürze wird zur Trennung der Abdeckung von der Seitenwand des Gehäuses verwendet, und enthält zu diesem Zweck einen Trennsteg, der zwischen der Abdeckung und der Seitenwand angeordnet ist.

Die Isolierschürze enthält weiterhin an ihrem oberen Ende eine Auflagefläche zum flächigen Auflegen der oberen Abdeckung, so dass es nicht notwendig ist, die obere Abdeckung zum Einstecken auszubilden, was herstellungstechnisch schwierig zu lösen wäre.

Die erfindungsgemäße Isolierschürze eignet sich weiterhin auch für eine flächige Auflage der Seitenwand, so dass die Montage wesentlich vereinfacht wird, wobei der zwischen den Auflageflächen für die Abdeckung und die Seitenwand vorhandene Trennsteg eine thermische Entkopplung bewirkt.

Die Isolierschürze, die zwei an seitlichen Enden der Isolierschürze angeordneten Isolierblöcke mit der Befestigungseinrichtung für den Brötchenaufsatz, die beiden Auflageflächen für die Seitenwand und die obere Abdeckung sowie den Trennsteg können an einem gemeinsamen Isolierelement vorgesehen werden, das aus einem Material mit geringer Wärmeleitfähigkeit einstückig geformt ist.

Ausführungsbeispiele der Erfindung werden nachfolgend anhand der Zeichnungen näher erläutert. Es zeigen:
- Fig. 1: eine perspektivische Draufsicht auf ein erstes Ausführungsbeispiel eines erfindungsgemäßen Toasters,
- Fig. 2: eine perspektivische Seitenansicht des Toasters gemäß Fig. 1,

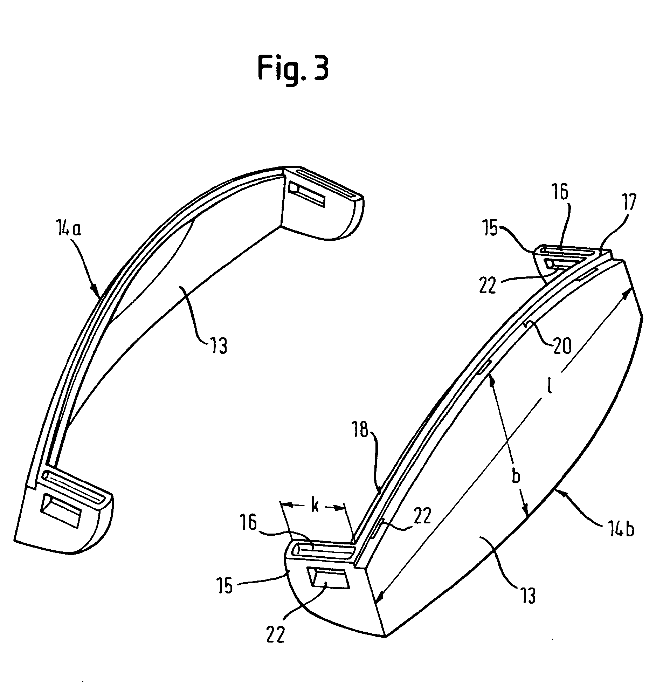

- Fig. 3: eine perspektivische Darstellung der Isolierelemente des Toasters gemäß den Fig. 1 und 2,
- Fig. 4: eine schematische Darstellung eines Querschnitts durch einen Teil des Toasters gemäß den Fig. 1 und 2, und
- Fig. 5: eine perspektivische Seitenansicht eines weiteren Ausführungsbeispiels eines erfindungsgemäßen Toasters.

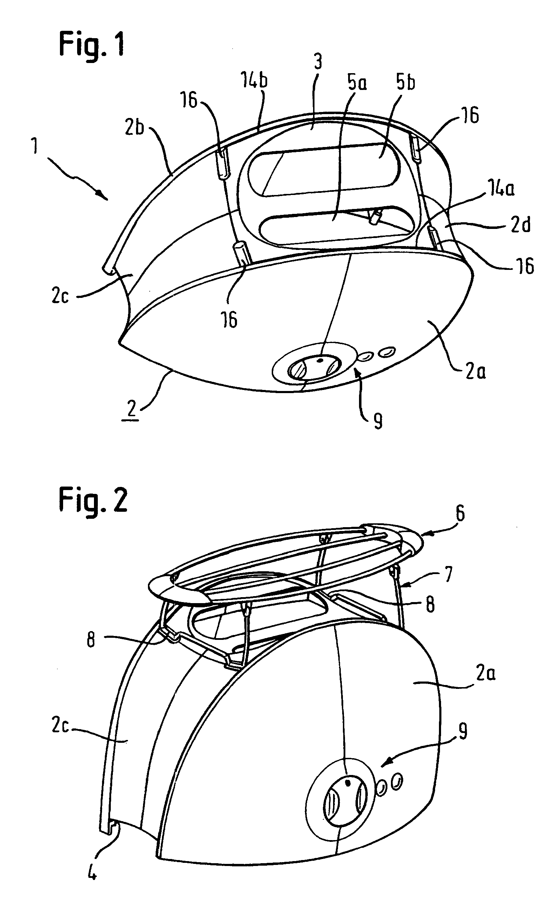

Aus den Fig. 1 und 2 ist ein Toaster 1 ersichtlich, der ein Gehäuse 2 aufweist, das im dargestellten Ausführungsbeispiel zwei einander gegenüberliegende Seitenwände 2a und 2b und zwei einander gegenüberliegende Stirnwände 2c und 2d aufweist. Das Gehäuse 2 enthält weiterhin eine obere Abdeckung 3 und eine nicht näher gezeichnete, untere Begrenzung 4, die beispielsweise durch ein Bodengitter, eine Krümelschale, ein Bodenblech oder dgl. gebildet werden kann.

Der Toaster 1 ist mit zwei Brotschlitzen 5a, 5b versehen, die sich durch die obere Abdeckung 3 erstrecken.

Das Gehäuse 2 und die obere Abdeckung 3 können aus Metallblech oder einem der üblicherweise für solche Zwecke eingesetzten Kunststoffmaterial gefertigt werden und können direkt mit einem Dekor versehen sein oder eine Dekorverkleidung aufweisen.

Wie Fig. 2 zeigt, kann mit dem Gehäuse 2 ein sogenannter Brötchenaufsatz 6 lösbar verbunden werden, der aus dem üblichen Drahtgestell besteht und zum Aufbacken von Brötchen, Erhitzen von Lebensmitteln oder dgl. verwendet wird. Der Brötchenaufsatz 6 enthält eine Standeinrichtung 7 mit vorzugsweise vier Standfüßen 8.

An einer der Seitenwände 2a, 2b sind die üblichen Bedienelemente und/oder Anzeigen 9 vorgesehen.

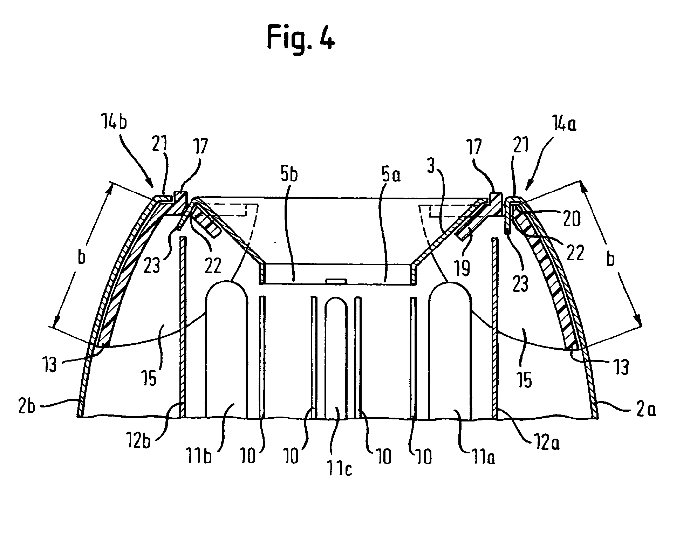

Die Brotschlitze 5a, 5b erstrecken sich im Wesentlichen parallel zu den Seitenwänden 2a, 2b und werden, wie insbesondere Fig. 4 zeigt, im Inneren des Gehäuses 2 durch die üblichen, seitlichen Begrenzungsflächen 10 begrenzt, die beispielsweise Gitter oder andere durchbrochene Konstruktionen sein können.

Zwischen jedem Brotschlitz 5a bzw. 5b und der jeweils benachbarten Seitenwand 2a bzw. 2b ist jeweils eine Heizeinheit 11a bzw. 11b angeordnet. Auch zwischen den Brotschlitzen 5a, 5b befindet sich eine Heizeinheit 11c. Als Heizeinheit kann jede bekannte Heizeinrichtung verwendet werden, die üblicherweise bei Toastern eingesetzt und zur Verwendung bei Toastern geeignet ist.

Zwischen den außenliegenden Heizeinheiten 11a, 11b und der jeweils benachbarten Seitenwand 2a, 2b ist jeweils ein Reflektor 12a, 12b vorgesehen. Als Reflektor kann jede geeignete Konstruktion verwendet werden, die für Toaster bisher eingesetzt bzw. für Toaster geeignet ist.

Die oberen Bereiche der Seitenwände 2a, 2b sind an ihren Innenseiten mit jeweils einer Isolierschürze 13 abgeschirmt, die eine Breite b aufweist. Die Breite b ist so bemessen, dass sie die Innenseite der jeweils anliegenden Seitenwand 2a, 2b über einen Isolierbereich von wenigstens 25 mm in Richtung auf die unteren Begrenzung 4 abdeckt, jedoch nicht bis zur unteren Begrenzung 4 reicht. Die Breite b beträgt bevorzugt zwischen 25 mm und 80 mm, insbesondere zwischen 25 mm und 50 mm. Jede Isolierschürze 13 besteht aus einem Material mit geringer Wärmeleitung, bevorzugt aus einem wärmbeständigen Kunststoff. Im vorliegenden Ausführungsbeispiel entspricht die Breite b der Isolierschürze 13 der Breite des Isolierbereichs, da die Isolierschürze 13 am oberen Ende der Seitenwände 2a, 2b angeordnet ist.

Die Isolierschürze 13 ist Teil eines Isolierelementes 14a, 14b, die jeweils einer der Seitenwände 2a, 2b zugeordnet sind. Die Isolierelemente 14a, 14b sind identisch bzw. spiegelbildlich ausgebildet, so dass nachfolgend nur eines der Isolierelemente, d.h. das Isolierelement 14b, näher erläutert wird.

Die Isolierschürze 13 ist streifen- bzw. plattenförmig ausgebildet und weist eine Länge I auf, die, wie insbesondere Fig. 1 zeigt, kürzer ist als die Länge der Seitenwand 2a, 2b und kürzer als der halbe Umfang der Abdeckung 3. Die Länge I ist jedoch bevorzugt etwas länger als die Länge der Brotschlitze 5a, 5b bzw. der Heizeinheiten 11a, 11b. Die beiden gegenüberliegenden Enden der Isolierschürze 13 sind jeweils mit einem Isolierblock 15 versehen. Jeder Isolierblock 15 steht im Wesentlichen rechtwinklig von der Isolierschürze 13 um den Betrag k vor, wobei jedoch der Winkel designabhängig ist. Der Betrag k ist bevorzugt so bemessen, dass die Isolierblöcke 15, wie die Fig. 1 und 4 zeigen, die stirnseitigen Enden der äußeren Heizeinheiten 11a, 11b zumindest teilweise übergreifen. Der Betrag k beträgt jedoch weniger als die halbe Abmessung des Gehäuses 2 entlang der Stirnwände 2d, 2c, so dass sich die Isolierblöcke 15 der gegenüberliegenden Isolierelemente 14a, 14b nicht berühren sondern einen Abstand zueinander aufweisen.

Die Isolierblöcke 15 sind mit einer Befestigungseinrichtung 16 zum Befestigen des Brötchenaufsatzes 6 versehen. Im dargestellten Ausführungsbeispiel ist die Befestigungseinrichtung 16 als Vertiefung zum Aufnehmen jeweils eines Fußes 8 des Brötchenaufsatzes 6 ausgebildet und im Hinblick auf seine Form und seine Abmessung so gestaltet, dass der jeweilige Fuß 8 im Gebrauch sicher in der Ausnehmung 16 gehalten wird, jedoch leicht wieder aus dieser herausgenommen werden kann.

Die Isolierschürze 13 ist in ihrem oberen Bereich mit einem Trennsteg 17 versehen. Der Trennsteg 17 steht vom oberen Bereich der Isolierschürze 13 nach oben vor und dient, wie Fig. 4 zeigt, der thermischen Trennung der oberen Abdeckung 3 zur jeweils anliegenden Seitenwand 2a, 2b.

Im dargestellten Ausführungsbeispiel ist die oberen Abdeckung 3 zum Auflegen auf das Isolierelement 14a, 14b ausgebildet. Zu diesem Zweck ist an der Isolierschürze 13 eine Auflagefläche 18 vorgesehen, auf die das Abdeckblech 3 flächig aufgelegt werden kann, wobei die Stirnseite des Abdeckbleches 3 an den Trennsteg 17 anstößt. Die Höhe des Trennsteges 17 über der Auflagefläche 18 ist so bemessen, dass der Trennsteg 17 entweder im Wesentlichen mit der nach außen weisenden Oberfläche der oberen Abdeckung 3 fluchtet oder über diese vorsteht. Die Auflagefläche 18 ist bevorzugt auf einem Auflagesteg 19 vorgesehen, der von der Isolierschürze 13 vorsteht und mit dieser einen Winkel einschließt, der an den Winkel angepasst ist, den die oberen Abdeckung 3 mit der Seitenwand 2a, 2b einschließen soll.

Die Isolierschürze 13 enthält weiterhin in ihrem oberen Bereich eine weitere Auflagefläche 20, an die ein oberer Bereich der Seitenwand 2a, 2b angelegt werden kann. Die Auflagefläche 20 verläuft im Wesentlichen horizontal, und die Seitenwände 2a, 2b sind mit einer horizontalen Abwinklung 21 versehen, die auf der Auflagefläche 20 aufliegt. Die Auflageflächen 18 und 20 sind für eine satte Auflage der ebenen oberen Abdeckung 3 und der ebenen Abwinklung 21 ebenfalls eben. Je nach der äußeren Form des Gehäuses 2 können die Isolierblöcke 15 mit nicht gezeichneten Auflageflächen für die obere Abdeckung 3 und/oder die Stirnwände 2c, 2d versehen sein.

Die Isolierschürze 13 und/oder die Isolierblöcke 15 sind mit Befestigungseinrichtungen für die obere Abdeckung 3 und/oder die Seitenwände 2a, 2b sowie gegebenenfalls die Stirnwände 2c, 2d versehen. Die Befestigungseinrichtung enthält im dargestellten Ausführungsbeispiel Schlitze 22, die sich durch die Auflageflächen 20 bzw. 18 erstrecken (s. auch Fig. 4), und Laschen 23 aufnehmen, die an der Abdeckung 3 und an der Seitenwand 2a, 2b, insbesondere an der Abwinklung 21 vorgesehen sind. Im Inneren des Gehäuses 2 können die Laschen 23 verdrillt werden, so dass ein Zurückrutschen durch die dimensionsmäßig angepassten Schlitze 22 verhindert wird.

Die Befestigungseinrichtung enthält weitere Schlitze 22, die an den Isolierblöcken 15 vorgesehen sind, und zwar bevorzugt an den einander zugewandten und an den einander abgewandten Seiten der Isolierblöcke 15, die zu diesem Zweck mit Vorsprüngen versehen sind. Auch die Schlitze in den Isolierblöcken 15 nehmen Laschen an der oberen Abdeckung 3 und/oder an den Stirnwänden 2c, 2d auf, um diese zu befestigen.

Die Isolierschürze 13 mit der Auflagefläche 20, die Isolierblöcke 15, der Anlagesteg 19 mit der Anlagefläche 18, der Trennsteg 17, die Ausnehmungen 16 und die Befestigungsvorrichtung 22 sind Teil eines einstückig ausgebildeten Isolierelements 14a, 14b, das aus einem geeigneten Kunststoff gegossen oder gespritzt wurde.

Die Isolierelemente 14a, 14b werden bei der Montage in das Gehäuse 2 integriert, wie dies insbesondere in den Fig. 1 und 4 zu sehen ist. Insbesondere werden die Isolierelemente 14a, 14b bei der Montage durch das Abdeckblech 3 und die Seitenwände 2a, 2b so weit abgedeckt, dass lediglich der Trennsteg 17 und die Befestigungsaufnahme 16 nach oben hin frei liegen.

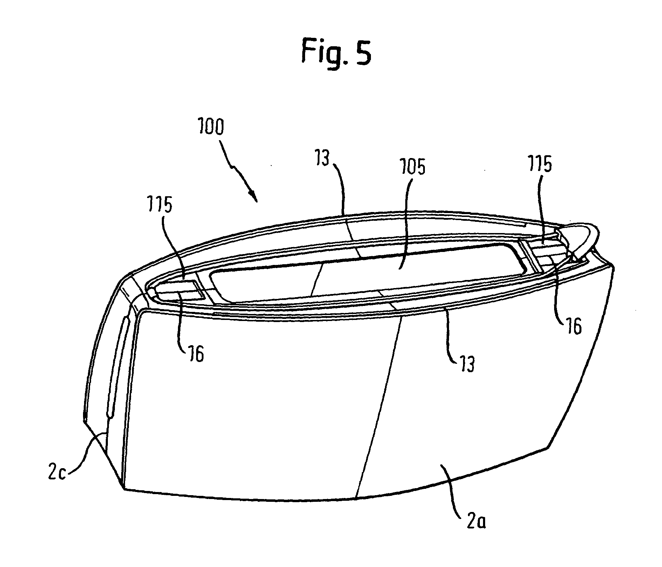

Fig. 5 zeigt in schematischer Darstellung ein weiteres Ausführungsbeispiel eines erfindungsgemäßen Toasters 100, der bis auf die nachfolgend beschriebenen Einzelheiten dem Toaster 1 entspricht, wobei gleiche bzw. vergleichbare Elemente mit den gleichen Bezugszeichen gekennzeichnet und nicht nochmals erläutert sind.

Der Toaster 100 ist ein Langschlitztoaster und enthält lediglich einen Brotschlitz 105. Auch der Toaster 100 kann die Isolierschürzen 13 enthalten. Beim Toaster 100 sind jedoch separate Isolierblöcke 115 vorgesehen, die beidseitig der schmalen Enden des Brotschlitzes 105 vorgesehen sind. Die Isolierblöcke 115 sind nicht an die Isolierschürze 13 angeformt und sind bevorzugt auch nicht anderweitig mit den Isolierschürzen 13 verbunden.

Die Isolierblöcke 115 bestehen, wie auch die Isolierblöcke 15, aus einem Material geringer Wärmeleitfähigkeit, und sind mit der Befestigungseinrichtung 16 für einen Brötchenaufsatz versehen. Im dargestellten Ausführungsbeispiel sind nur zwei Isolierblöcke 115 vorhanden, die symmetrisch zum Brotschlitz 105 angeordnet sind. Die Isolierblöcke 115 können einen Abstand zu den Stirn- und Seitenwänden 2a - 2d aufweisen.

In Abwandlung der beschriebenen und gezeichneten Ausführungsbeispiele können die Isolierelemente auch aus Einzelteilen zusammengestellt werden. Gegebenenfalls kann ein Toaster auch nur mit den Isolierschürzen oder auch nur mit den Isolierblöcken versehen sein. Je nach Design und Konstruktion des Toasters können andere Abwandlungen und Veränderungen notwendig werden. So benötigt ein Toaster, der ohne Brötchenaufsatz geliefert wird, keine Befestigungsausnehmungen in den Isolierblöcken. Werden die Isolierelemente in anderer Weise mit dem Gehäuse verbunden, so können auch die Schlitze entfallen. Auch die Form der Isolierschürze kann je nach Form und Design der Seitenwände variieren.

## Patentansprüche

1. Toaster (1, 100), mit einem Gehäuse (2), das Seitenwände (2a, 2b), eine untere Begrenzung (4) und eine obere Abdeckung (3) enthält, wobei im Gehäuse (2) wenigstens ein Brotschlitz (5a, 5b, 105) ausgebildet ist, und zwischen dem Brotschlitz (5a, 5b, 105) und der benachbarten Seitenwand (2a, 2b) eine Heizeinheit (11a, 11b) angeordnet ist, **gekennzeichnet durch** eine Isolierschürze (13), die zwischen der Seitenwand (2a, 2b) und der Heizeinheit (11a, 11b) angeordnet ist und sich an der Innenseite der Seitenwand (2a, 2b) über einen Isolierbereich erstreckt, der sich über eine Breite von wenigstens 25 mm in Richtung auf die untere Begrenzung (4) erstreckt und im Abstand zur unteren Begrenzung (4) endet, und die einen Trennsteg (17) aufweist, der zwischen der Abdeckung (3) und der Seitenwand (2a, 2b) angeordnet ist.

2. Toaster nach Anspruch 1, **dadurch gekennzeichnet, dass** der Isolierschürze (13) ein Isolierblock (15, 115) zugeordnet ist, der an der der Seitenwand (2a, 2b) abgewandten Seite der Isolierschürze (13) angeordnet ist.

3. Toaster nach Anspruch 2, **dadurch gekennzeichnet, dass** beiden Enden der Isolierschürze (13) jeweils ein Isolierblock (15, 115) zugeordnet ist.

4. Toaster nach Anspruch 2 oder 3, **dadurch gekennzeichnet, dass** der Isolierblock (15, 115) die Heizeinheit (11a, 11b) stirnseitig übergreift.

5. Toaster nach einem der Ansprüche 2 bis 4, **dadurch gekennzeichnet, dass** der Isolierblock (15, 115) mit einer Befestigungseinrichtung (16) zum Anbringen eines Brötchenaufsatzes (7) versehen ist.

6. Toaster nach Anspruch 5, **dadurch gekennzeichnet, dass** die Befestigungseinrichtung (16) eine Aufnahmeöffnung ist.

7. Toaster nach einem der Ansprüche 1 bis 6, **dadurch gekennzeichnet, dass** die Isolierschürze (13) eine Länge aufweist, die kleiner oder gleich der Länge der Seitenwand (2a, 2b) und kleiner als der Umfang der oberen Abdeckung (3) ist.

8. Toaster nach einem der Ansprüche 1 bis 7, **dadurch gekennzeichnet, dass** die Isolierschürze (13) am oberen Ende eine Auflagefläche (18) zum flächigen Auflegen der oberen Abdeckung (3) aufweist.

9. Toaster nach einem der Ansprüche 1 bis 8, **dadurch gekennzeichnet, dass** das obere Ende der Isolierschürze (13) mit einer Auflagefläche (20) für die Seitenwand (2a, 2b) und einer Auflagefläche (18) für die Abdeckung (3) versehen ist, wobei die Auflageflächen (18, 20) durch einen über die Auflageflächen (18, 20) vorstehenden Trennsteg (17) getrennt sind.

10. Toaster nach einem der Ansprüche 1 bis 9, **gekennzeichnet durch** ein Isolierelement (14a, 14b), das die Isolierschürze (13), zwei an seitlichen Enden der Isolierschürze (13) angeordnete Isolierblöcke (15), eine Auflagefläche (20) für die Seitenwand (2a, 2b), einen entlang des oberen Bereichs der Isolierschürze (13) verlaufenden Trennsteg (17) und einen sich an den Trennsteg (17) anschließenden Auflagesteg (19) mit einer Auflagefläche (18) zum flächigen Auflegen der oberen Abdeckung (3) enthält.

11. Toaster (1, 100), mit einem Gehäuse (2), das Seitenwänden (2a, 2b), eine untere Begrenzung (4) und eine obere Abdeckung (3) enthält, wobei im Gehäuse (2) wenigstens ein Brotschlitz (105) ausgebildet ist, und zwischen dem Brotschlitz (105) und der benachbarten Seitenwand (2a, 2b) eine Heizeinheit (11a, 11b) angeordnet ist, **gekennzeichnet durch** wenigstens einen Isolierblock (15, 115), der mit einer Befestigungseinrichtung (16) zum Anbringen eines Brötchenaufsatzes (6) versehen ist und **durch** eine zwischen der Seitenwand (2a, 2b) und der Heizeinheit (11a, 11b) angeordnete Isolierschürze (13), die sich an der Innenseite der Seitenwand (2a, 2b) über einen Isolierbereich erstreckt, der sich über eine Breite von wenigstens 25 mm in Richtung auf die untere Begrenzung (4) erstreckt und im Abstand zur unteren Begrenzung (4) endet.

12. Toaster nach Anspruch 11 **dadurch gekennzeichnet, dass** die Befestigungseinrichtung (16) eine Aufnahmeöffnung ist.

13. Toaster nach Anspruch 11 oder 12, **dadurch gekennzeichnet, dass** beiden Enden der Isolierschürze (13) jeweils ein Isolierblock (15, 115) zugeordnet ist.

14. Toaster nach einem der Ansprüche 11 bis 13, **dadurch gekennzeichnet, dass** der Isolierblock (15, 115) die Heizeinheit (11a, 11b) stirnseitig übergreift.

15. Toaster nach einem der Ansprüche 11 bis 14, **dadurch gekennzeichnet, dass** die Isolierschürze (13) eine Länge aufweist, die kleiner oder gleich der Länge der Seitenwand (2a, 2b) und kleiner als der Umfang der oberen Abdeckung (3) ist.

16. Toaster nach einem der Ansprüche 11 bis 15, **dadurch gekennzeichnet, dass** die Isolierschürze (13) einen Trennsteg (17), aufweist, der zwischen der Abdeckung (3) und der Seitenwand (2a, 2b) angeordnet ist.

17. Toaster nach einem der Ansprüche 11 bis 16, **dadurch gekennzeichnet, dass** die Isolierschürze (13) am oberen Ende eine Auflagefläche (18) zum flächigen Auflegen der oberen Abdeckung (3) aufweist.

18. Toaster nach einem der Ansprüche 11 bis 17, **dadurch gekennzeichnet, dass** das obere Ende der Isolierschürze (13) mit einer Auflagefläche (20) für die Seitenwand (2a, 2b) und einer Auflagefläche (18) für die Abdeckung (3) versehen ist, wobei die Auflageflächen (18, 20) durch einen über die Auflageflächen (18, 20) vorstehenden Trennsteg (17) getrennt sind.

## Claims

1. Toaster (1, 100), with a housing (2), which comprises side walls (2a, 2b), a lower boundary (4) and an upper cover (3), wherein at least one bread slot (5a, 5b, 105) is formed in the housing (2) and a heating unit (11a, 11b) is arranged between the bread slot (5a, 5b, 105) and the adjacent side wall (2a, 2b), **characterised by** an insulating skirt (13) arranged between the side wall (2a, 2b) and the heating unit (11a, 11b) and extending at the inner side of the side wall (2a, 2b) over an insulating region, which extends over a width of at least 25 millimetres in direction towards the lower boundary (4) and ends at a spacing from the lower boundary (4), and which has a separating web (17) arranged between the cover (3) and the side wall (2a, 2b).

2. Toaster according to claim 1, **characterised in that** an insulating block (15, 115) is associated with the insulating skirt (13) and is arranged at the side of the insulating skirt (13) remote from the side wall (2a, 2b).

3. Toaster according to claim 2, **characterised in that** a respective insulating block (15, 115) is associated with each of the two ends of the insulating skirt (13).

4. Toaster according to claim 2 or 3, **characterised in that** the insulating block (15, 115) engages over the heating unit (11a, 11b) at the end.

5. Toaster according to any one of claims 2 to 4, **characterised in that** the insulating block (15, 115) is provided with a fastening device (16) for mounting of a bread roll attachment (7).

6. Toaster according to claim 5, **characterised in that** the fastening device (16) is a receiving opening.

7. Toaster according to any one of claims 1 to 6, **characterised in that** the insulating skirt (13) has a length which is smaller than or equal to the length of the side wall (2a, 2b) and smaller than the circumference of the upper cover (3).

8. Toaster according to any one of claims 1 to 7, **characterised in that** the insulating skirt (13) has at the upper end a support surface (18) for support of the upper cover (3) over an area.

9. Toaster according to any one of claims 1 to 8, **characterised in that** the upper end of the of the insulating skirt (13) is provided with a support surface (20) for the side wall (2a, 2b) and a support surface (18) for the cover (3), wherein the support surfaces (18, 20) are separated by a separating web (17) protruding beyond the support surfaces (18, 20).

10. Toaster according to any one of claims 1 to 9, **characterised by** an insulating element (14a, 14b), which comprises the insulating skirt (13), two insulating blocks (15) arranged at lateral ends of the insulating skirt (13), a support surface (20) for the side wall (2a, 2b), a separating web (17) running along the upper region of the insulating skirt (13) and a support web (19), which adjoins the separating web (17), with a support surface (18) for support of the upper cover (3) over an area.

11. Toaster (1, 100), with a housing (2) which comprises side walls (2a, 2b), a lower boundary (4) and an upper cover (3), wherein at least one bread slot (105) is formed in the housing (2), and a heating unit (11a, 11b) is arranged between the bread slot (105) and the adjacent side wall (2a, 2b), **characterised by** at least one insulating block (15, 115) which is provided with a fastening device (16) for mounting a bread roll attachment (6) and by an insulating skirt (13), which is arranged between the side wall (2a, 2b) and the heating unit (11a, 11b) and extends at the inner side of the side wall (2a, 2b) over an insulating region, extending over a width of at least 25 millimetres in direction towards the lower boundary (5) and ending at a spacing from the lower boundary (4).

12. Toaster according to claim 11, **characterised in that** the fastening device (16) is a receiving opening.

13. Toaster according to claim 11 or 12, **characterised in that** a respective insulating block (15, 115) is associated with each of the two ends of the insulating skirt (13).

14. Toaster according to any one of claims 11 to 13, **characterised in that** the insulating block (15, 115) engages over the heating unit (11a, 11b) at the end.

15. Toaster according to any one of claims 11 to 14, **characterised in that** the insulating skirt (13) has a length which is smaller than or equal to the length of the side wall (2a, 2b) and smaller than the circumference of the upper cover (3).

16. Toaster according to any one of claims 11 to 15, **characterised in that** the insulating skirt (13) has a separating web (17) arranged between the cover (3) and the side wall (2a, 2b).

17. Toaster according to any one of claims 11 to 16, **characterised in that** the insulating skirt (13) has at the upper end a support surface (18) for support of the upper cover (3) over an area.

18. Toaster according to any one of claims 11 to 17, **characterised in that** the upper end of the insulating skirt (13) is provided with a support surface (20) for the side wall (2a, 2b) and a support surface (18) for the cover (3), wherein the support surfaces (18, 20) are separated by a separating web (17) protruding beyond the support surfaces (18, 20).

## Revendications

1. Grille-pain (1, 100), comprenant un boîtier (2) qui comprend des parois latérales (2a, 2b), une limitation inférieure (4) et un couvercle supérieur (3), au moins une fente à pain (5a, 5b, 105) étant formée dans le boîtier (2) et une unité chauffante (11a, 11b) étant située entre la fente à pain (5a, 5b, 105) et la paroi latérale adjacente (2a, 2b), **caractérisé par** une jupe isolante (13) qui est située entre la paroi latérale (2a, 2b) et l'unité chauffante (11a, 11b) et s'étend sur le côté intérieur de la paroi latérale (2a, 2b) sur une zone isolante qui s'étend sur une largeur d'au moins 25 mm en direction de la limitation inférieure (4) et se termine à une distance de la limitation inférieure (4), et qui est pourvue d'une nervure de séparation (17) qui est située entre le couvercle (3) et la paroi latérale (2a, 2b).

2. Grille-pain selon la revendication 1, **caractérisé en ce qu'**un bloc isolant (15, 115), qui est situé sur le côté de la jupe isolante (13) détourné de la paroi latérale (2a, 2b), est associé à la jupe isolante (13).

3. Grille-pain selon la revendication 2, **caractérisé en ce qu'**un bloc isolant (15, 115) est associé respectivement aux deux extrémités de la jupe isolante (13).

4. Grille-pain selon la revendication 2 ou 3, **caractérisé en ce que** le bloc isolant (15, 115) empiète sur le côté frontal de l'unité chauffante (11a, 11b).

5. Grille-pain selon l'une des revendications 2 à 4, **caractérisé en ce que** le bloc isolant (15, 115) est pourvu d'un dispositif de fixation (16) pour l'ajout d'un accessoire pour petits-pains (7).

6. Grille-pain selon la revendication 5, **caractérisé en ce que** le dispositif de fixation (16) est une ouverture de réception.

7. Grille-pain selon l'une des revendications 1 à 6, **caractérisé en ce que** la jupe isolante (13) a une longueur qui est inférieure ou égale à la longueur de la paroi latérale (2a, 2b) et inférieure au périmètre du couvercle supérieur (3).

8. Grille-pain selon l'une des revendications 1 à 7, **caractérisé en ce que** la jupe isolante (13) est pourvue, au niveau de l'extrémité supérieure, d'une surface d'appui (18) permettant l'appui en surface du couvercle supérieur (3).

9. Grille-pain selon l'une des revendications 1 à 8, **caractérisé en ce que** l'extrémité supérieure de la jupe isolante (13) est pourvue d'une surface d'appui (20) pour la paroi latérale (2a, 2b) et d'une surface d'appui (18) pour le couvercle (3), les surfaces d'appui (18, 20) étant séparées par une nervure de séparation (17) saillante par rapport aux surfaces d'appui (18, 20).

10. Grille-pain selon l'une des revendications 1 à 9, **caractérisé par** un élément isolant (14a, 14b) qui comprend la jupe isolante (13), deux blocs isolants (15) situés au niveau des extrémités latérales de la jupe isolante (13), une surface d'appui (20) pour la paroi latérale (2a, 2b), une nervure de séparation (17) s'étendant le long de la zone supérieure de la jupe isolante (13) et une barrette d'appui (19) se joignant à la nervure de séparation (17) et pourvue d'une surface d'appui (18) permettant l'appui en surface du couvercle supérieur (3).

11. Grille-pain (1, 100), comprenant un boîtier (2) qui comprend des parois latérales (2a, 2b), une limitation inférieure (4) et un couvercle supérieur (3), au moins une fente à pain (105) étant formée dans le boîtier (2) et une unité chauffante (11a, 11b) étant située entre la fente à pain (105) et la paroi latérale adjacente (2a, 2b), **caractérisé par** au moins un bloc isolant (15, 115) qui est pourvu d'un dispositif de fixation (16) pour l'ajout d'un accessoire pour petits pains (6) et par une jupe isolante (13) située entre la paroi latérale (2a, 2b) et l'unité chauffante (11a, 11b), qui s'étend sur le côté intérieur de la paroi latérale (2a, 2b) sur une zone isolante qui s'étend sur une largeur d'au moins 25 mm en direction de la limitation inférieure (4) et se termine à une distance de la limitation inférieure (4).

12. Grille-pain selon la revendication 11, **caractérisé en ce que** le dispositif de fixation (16) est une ouverture de réception.

13. Grille-pain selon la revendication 11 ou 12, **caractérisé en ce qu'**un bloc isolant (15, 115) est associé respectivement aux deux extrémités de la jupe isolante (13).

14. Grille-pain selon l'une des revendications 11 à 13, **caractérisé en ce que** le bloc isolant (15, 115) empiète sur le côté frontal de l'unité chauffante (11a, 11b).

15. Grille-pain selon l'une des revendications 11 à 14, **caractérisé en ce que** la jupe isolante (13) a une longueur qui est inférieure ou égale à la longueur de la paroi latérale (2a, 2b) et inférieure au périmètre du couvercle supérieur (3).

16. Grille-pain selon l'une des revendications 11 à 15, **caractérisé en ce que** la jupe isolante (13) est pourvue d'une nervure de séparation (17) qui est située entre le couvercle (3) et la paroi latérale (2a, 2b).

17. Grille-pain selon l'une des revendications 11 à 16, **caractérisé en ce que** la jupe isolante (13) est pourvue, au niveau de l'extrémité supérieure, d'une surface d'appui (18) permettant l'appui en surface du couvercle supérieur (3).

18. Grille-pain selon l'une des revendications 11 à 17, **caractérisé en ce que** l'extrémité supérieure de la jupe isolante (13) est pourvue d'une surface d'appui (20) pour la paroi latérale (2a, 2b) et d'une surface d'appui (18) pour le couvercle (3), les surfaces d'appui (18, 20) étant séparées par une nervure de séparation (17) saillante par rapport aux surfaces d'appui (18, 20).
